# EUROPÄISCHE PATENTSCHRIFT

(11) **EP 3 368 452 B1**
(45) Veröffentlichungstag und Bekanntmachung des Hinweises auf die Patenterteilung: **13.01.2021**
(21) Anmeldenummer: 16777973.5
(22) Anmeldetag: 03.10.2016
(51) Int. Cl.: B65G 47/22, B65G 47/244, B07C 1/06

(54) **AUSRICHTUNGSSTATION ZUM AUSRICHTEN VON IN EINEM FÖRDERSYSTEM BEFÖRDERTEN FÖRDERGUT**
ALIGNMENT STATION FOR ALIGNING CONVEYED GOODS TRANSPORTED IN A CONVEYOR SYSTEM
STATION D'ORIENTATION PERMETTANT D'ORIENTER UN ARTICLE À TRANSPORTER TRANSPORTÉ DANS UN SYSTÈME DE TRANSPORT

(30) Priorität: 08.10.2015 AT 508652015
(43) Veröffentlichungstag der Anmeldung: 05.09.2018
(73) Patentinhaber: Klatt Fördertechnik GmbH, 5202 Neumarkt am Wallersee (AT)
(72) Erfinder: Klatt, Peter, 5202 Neumarkt am Wallersee (AT)
(74) Vertreter: Tetzner, Thomas
(86) Internationale Anmeldenummer: PCT/EP2016/073572
(87) Internationale Veröffentlichungsnummer: WO 2017/060198

(56) Entgegenhaltungen:
- EP-A2- 0 218 550
- DE-A1- 19 728 659
- DE-A1-102013 212 317
- US-A- 3 799 319
- US-A- 4 889 224

## Beschreibung

Die Erfindung betrifft eine Ausrichtstation zum Ausrichten von in einem Fördersystem beförderten Fördergut.

Aus der DE 10 2013 212 317 A1 und der EP 1 556 297 B1 sind Ausrichtstationen bekannt, in welchen das in einem Fördersystem beförderte Fördergut ausgerichtet werden kann.

Die Ausführungen der DE 10 2013 212 317 A1 und der EP 1 556 297 B1 weisen den Nachteil auf, dass sie komplex aufgebaut und daher fehleranfällig sind und dass die Förderstücke nicht exakt ausgerichtet werden können.

Die DE 197 28 659 A1 offenbart eine Vorrichtung zur Umorientierung von Gegenständen.

Die Gegenstände liegen jeweils an ihren Längsenden an zwei nebeneinander angeordneten Förderbändern auf. Diesen beiden Förderbändern ist ein weiteres Förderband nachgeordnet, wobei sich eines der beiden ersten Förderbänder über das zweite Förderband hinweg erstreckt.

Das Dokument EP 0 218 550 A2 zeigt eine Ausrichtstation für Schokoladeriegel, welche eine einheitliche Form aufweisen und mit möglichst hoher Taktzahl um 90° gedreht werden sollen. Die Ausrichtstation umfasst eine Zufördervorrichtung, eine Vororientierungsvorrichtung mit zwei nebeneinander angeordneten bandförmig umlaufenden Fördermitteln und eine Hauptorientierungsvorrichtung. Diese Hauptorientierungsvorrichtung weist ein Fördermittel und eine in einem Winkel dazu angeordnete seitliche Führungseinheit auf, sodass eine Seitenfläche des Fördergutes während des Fördervorganges gegen die seitliche Führungseinheit gedrückt wird

Das Dokument EP 0 218 550 A2 offenbart den Oberbegriff des Anspruchs 1. Das Dokument EP 0 218 550 A2 offenbart ein Verfahren zum Ausrichten von in einem Fördersystem beförderten Fördergut, das Verfahren umfassend folgende Verfahrensschritte:
- Zufördern des Fördergutes an einer Zufördervorrichtung;
- Vorausrichten des Fördergutes in einer Vororientierungsvorrichtung, wobei die Vororientierungsvorrichtung über dessen Breite gesehen zumindest zwei, vorzugsweise bandförmig umlaufende, Fördermittel aufweist und das Vorausrichtendadurchbewerkstelligt wird, dass die beiden Fördermittel, mit unterschiedlicher Vorschubgeschwindigkeit angetrieben werden und dadurch das Fördergut, welches an zumindest zwei der Fördermittel aufliegt, in Richtung seiner Soll-Lage gedreht wird; wobei in einer anschließenden Hauptorientierungsvorrichtung das Fördergut endausgerichtet wird, wobei die Hauptorientierungsvorrichtung eine seitliche Führungseinheit aufweist und weiters zumindest ein, vorzugsweise bandförmig umlaufendes, Fördermittel aufweist, welches in Förderrichtung gesehen in einem Winkel zur seitlichen Führungseinheit angeordnet ist, wobei das Fördergut von dem Fördermittel gegen eine Führungsfläche der seitlichen Führungseinheit gedrückt wird, wobei eine Seitenfläche des Fördergutes parallel zur Führungsfläche der seitlichen Führungseinheit ausgerichtet wird, und wobei das Fördermittel der Hauptorientierungsvorrichtung bezüglich dessen Förderrichtung in einem Winkel zur Führungsfläche ausgerichtet ist.

Aufgabe der vorliegenden Erfindung war es, die Nachteile des Standes der Technik zu überwinden und eine Vorrichtung und ein Verfahren zur Verfügung zu stellen, mittels derer das beförderte Fördergut möglichst gut ausgerichtet werden kann.

Diese Aufgabe wird durch eine Vorrichtung und ein Verfahren gemäß den Ansprüchen 1 und 14 gelöst.

Erfindungsgemäß ist eine Ausrichtstation zum Ausrichten von in einem Fördersystem beförderten Fördergut, vorzugsweise Gepäckstücken, ausgebildet. Die Ausrichtstation umfasst: Eine Zufördervorrichtung zum Zufördern des Fördergutes; Ein optisches Erfassungsmittel zum Erfassen der Lage des an der Zufördervorrichtung geförderten Fördergutes; Eine Vororientierungsvorrichtung zum Ausrichten des Fördergutes, welche Vororientierungsvorrichtung über dessen Breite gesehen zumindest zwei, vorzugsweise bandförmig umlaufende, Fördermittel aufweist, welche unabhängig voneinander antreibbar sind; und weiters eine Hauptorientierungsvorrichtung zum Endausrichten des Fördergutes umfasst, welche Hauptorientierungsvorrichtung eine seitliche Führungseinheit aufweist und weiters zumindest ein, vorzugsweise bandförmig umlaufendes, Fördermittel aufweist, welches in Förderrichtung gesehen in einem Winkel zur seitlichen Führungseinheit angeordnet ist, sodass eine Seitenfläche des Fördergutes während dem Fördervorgang gegen die seitliche Führungseinheit gedrückt ist Die Führungsfläche ist parallel zur Längserstreckung der Vororientierungsvorrichtung ausgerichtet. Weiters ist vorgesehen, dass das Fördermittel der Hauptorientierungsvorrichtung bezüglich dessen Förderrichtung in einem Winkel zur Führungsfläche ausgerichtet ist.

Von Vorteil an der erfindungsgemäßen Ausbildung der Ausrichtstation ist, dass ein auszurichtendes Fördergut in der Vororientierungsvorrichtung grob bezüglich seiner gewünschten SollPosition ausgerichtet werden kann. In der anschließenden Hauptorientierungsvorrichtung kann das Fördergut dann endausgerichtet werden. Durch die Hauptorientierungsvorrichtung kann darüber hinaus erreicht werden, dass eine zu bestimmende Seitenfläche des Fördergutes parallel zur seitlichen Führungseinheit der Hauptorientierungsvorrichtung ausgerichtet wird und an dieser anliegt. Dadurch kann sowohl die Drehorientierung bezüglich einer Hochachse des Fördergutes als auch die Lage der Seitenfläche des Fördergutes in der Hauptorientierungsvorrichtung ausgerichtet werden. Als Endausrichtung bzw. Endorientierung der Hauptorientierungsvorrichtung wird die Lage des Fördergutes beim Verlassen der Hauptorientierungsvorrichtung bezeichnet. Es ist denkbar, dass an die Hauptorientierungsvorrichtung weitere Orientierungsmaßnahmen anschließen.

Weiters kann es zweckmäßig sein, dass das optische Erfassungsmittel, vorzugsweise zentral bezüglich der Breite der Zufördervorrichtung, über der Zufördervorrichtung angeordnet ist. Als besonders vorteilhaft hat es sich hierbei erwiesen, wenn das optische Erfassungsmittel im Bereich der Zufördervorrichtung angeordnet ist, insbesondere zentral bezüglich der Breite der Zufördervorrichtung über dieser in einem Abstand angeordnet ist. Dadurch kann das Fördergut rechtzeitig bezüglich seiner Orientierung um dessen Hochachse vom optischen Erfassungsmittel erfasst werden. In einem weiteren Verfahrensschritt kann dann die tatsächliche Ist-Orientierung bzw. die gewünschte Soll-Orientierung des Fördergutes von einer Recheneinheit berechnet werden.

Ferner kann vorgesehen sein, dass die Zufördervorrichtung in Form eines Bandförderers ausgebildet ist. Von Vorteil ist hierbei, dass ein Bandförderer möglichst einfach aufgebaut sein kann und nur eine Antriebseinheit aufweisen muss. Dadurch kann die Fehleranfälligkeit bzw. die Wartungsintensität der Zufördervorrichtung möglichst gering gehalten werden.

Darüber hinaus kann vorgesehen sein, dass ein weiteres optisches Erfassungsmittel ausgebildet ist, welches, vorzugsweise zentral bezüglich der Breite der Vororientierungsvorrichtung, über der Vororientierungsvorrichtung angeordnet ist. Von Vorteil ist hierbei, dass mittels den weiteren optischen Erfassungsmitteln die aktuelle Lage des Fördergutes während des Orientierens an der Vororientierungsvorrichtung überwacht werden kann und gegebenenfalls die ermittelten Daten des weiteren optischen Erfassungsmittels zur Korrektur der Steuerungsdaten der Vororientierungsvorrichtung einfließen können. Mit anderen Worten ausgedrückt kann mittels dem weiteren optischen Erfassungsmittel ein Regelkreis zur Orientierung des Fördergutes realisiert werden.

Vorteilhaft ist auch eine Ausprägung, gemäß welcher vorgesehen sein kann, dass die Fördermittel der Vororientierungsvorrichtung in Form einer Gliederkette ausgebildet sind. Eine Gliederkette ist insbesondere sehr robust bzw. einfach und somit kostengünstig und wenig wartungsintensiv aufgebaut. Darüber hinaus kann eine Gliederkette einfach angetrieben werden.

Gemäß einer Weiterbildung ist es möglich, dass die Fördermittel der Vororientierungsvorrichtung eine Breite zwischen 200mm und 5mm, insbesondere zwischen 150mm und 10mm, bevorzugt zwischen 70mm und 20mm aufweisen. Von Vorteil ist hierbei, dass Fördermittel mit einer derartigen Breite ein überraschend gutes Verhalten bezüglich der Möglichkeit zum Drehen von verschiedenartig ausgebildeten Fördergütern aufweisen. Darüber hinaus weisen Fördermittel mit einer derartigen Breite einen möglichst geringen Platzbedarf bei möglichst großem Funktionserhalt auf.

Ferner kann es zweckmäßig sein, dass die Vororientierungsvorrichtung über deren Breite verteilt zwischen 5 und 30, insbesondere zwischen 10 und 25, bevorzugt zwischen 15 und 25 Fördermittel aufweist. Von Vorteil ist hierbei, dass durch die beschriebene Ausbildung der Vororientierungsvorrichtung verschiedenst ausgebildete Fördergüter, wie etwa Pakete, Hartschalenkoffer, Taschen und sonstiges, gut ausgerichtet werden können.

Darüber hinaus kann vorgesehen sein, dass zwischen den einzelnen Fördermitteln der Vororientierungsvorrichtung ein Zwischensteg angeordnet ist, der die einzelnen Fördermittel voneinander trennt. Von Vorteil ist hierbei, dass die einzelnen Fördermittel nicht aneinander anliegen und somit keine Reibung zwischen den einzelnen Fördermitteln entstehen kann. Darüber hinaus können die einzelnen Fördermittel durch die Zwischenstege gut geführt werden, wodurch eine hohe Seitenstabilität der schmalen Fördermittel erreicht werden kann.

Weiters kann vorgesehen sein, dass jedes der einzelnen Fördermittel der Vororientierungsvorrichtung von einer eigenen Antriebseinheit angetrieben wird, wobei die Geschwindigkeit der einzelnen Antriebseinheiten stufenlos regelbar ist. Von Vorteil ist hierbei, dass die Verfahrgeschwindigkeit bzw. Fördergeschwindigkeit jedes einzelnen Fördermittels individuell vorgebbar ist, wodurch das Fördergut in jede beliebige Lage bezüglich der Hochachse gedreht werden kann.

Gemäß einer besonderen Ausprägung ist es möglich, dass die Antriebseinheiten in Längsrichtung der Vororientierungsvorrichtung gesehen reihenweise an dieser angeordnet sind, wobei in Abhängigkeit von der Anzahl n der Reihen, jedes im Abstand n-1 befindliche Fördermittel von den in einer Reihe angeordneten Antriebseinheiten antreibbar ist. Von Vorteil ist hierbei, dass eine hohe Anzahl von benötigten Antriebseinheiten platzsparend an der Vororientierungsvorrichtung angeordnet sein kann. Wenn beispielsweise zwei Reihen an Fördermitteln ausgebildet sind, so kann in einer Reihe von Antriebseinheiten jedes zweite Fördermittel angetrieben werden, was insbesondere heißt dass sich neben einem Fördermittel welches von einer Antriebseinheit der ersten Reihe angetrieben wird ein Fördermittel befindet, welches von einer Antriebseinheit der zweiten Reihe angetrieben wird.

Entsprechend einer vorteilhaften Weiterbildung kann vorgesehen sein, dass die seitliche Führungseinheit der Hauptorientierungsvorrichtung ein umlaufendes Band aufweist. Insbesondere ist hier von Vorteil, dass durch das umlaufende Band hintangehalten wird, dass das Fördergut relativ zu einer Führungsfläche der Führungseinheit bewegt werden muss. Somit kann ein Beschädigen des Fördergutes durch schleifende Relativbewegung möglichst hintangehalten werden. Darüber hinaus kann dadurch erreicht werden, dass das Fördergut durch die seitliche Führungseinheit nicht gebremst wird und es dadurch nicht zu einem erhöhten Energiebedarf kommt.

In einer Weiterbildung kann vorgesehen sein, dass das umlaufende Band der seitlichen Führungseinheit der Hauptorientierungsvorrichtung mit einem Antriebsmotor gekoppelt ist. Von Vorteil ist hierbei, dass das umlaufende Band der seitlichen Führungseinheit dadurch aktiv angetrieben werden kann und nicht durch das Fördergut bewegt werden muss.

Insbesondere kann es vorteilhaft sein, dass der Winkel zwischen dem Fördermittel und der seitlichen Führungseinheit der Hauptorientierungsvorrichtung zwischen 2° und 45°, insbesondere zwischen 5° und 30°, bevorzugt zwischen 8° und 20° beträgt. Eine Anordnung des Fördermittels der Hauptorientierungsvorrichtung in diesem Winkelbereich bringt den überraschenden Vorteil mit sich, dass das Fördergut möglichst schonend und somit möglichst wenig fehleranfällig ausgerichtet werden kann.

Gemäß einer Weiterbildung ist es möglich, dass die Hauptorientierungsvorrichtung mehrere über die Breite verteilte bandförmig umlaufende Fördermittel aufweist, welche von einer gemeinsamen Antriebseinheit angetrieben werden, wobei die Umlenkrollen der einzelnen bandförmig umlaufenden Fördermittel derart gestuft zueinander angeordnet sind, dass sich eine im rechten Winkel zur Führungseinheit angeordnete Abschlusskante ergibt. Von Vorteil ist hierbei, dass der Übergang zwischen Vororientierungsvorrichtung und Hauptorientierungsvorrichtung bzw. zwischen Hauptorientierungsvorrichtung und einem nachgeschalteten Abzugsförderband möglichst spaltfrei ausgebildet sein kann und dadurch das Fördergut möglichst schonend in der Ausrichtstation transportiert wird.

Ferner kann es zweckmäßig sein, dass die gemeinsame Antriebseinheit innerhalb der beiden Umlenkrollen der Hauptorientierungsvorrichtung angeordnet ist. Von Vorteil ist hierbei, dass die gemeinsame Antriebseinheit einen möglichst einfachen Aufbau aufweisen kann, wobei sämtliche Fördermittel der Hauptorientierungsvorrichtung von der gemeinsamen Antriebseinheit angetrieben werden können.

Darüber hinaus kann vorgesehen sein, dass eine Recheneinheit, vorzugsweise eine Speicherprogrammierbare Steuerung, oder ein Industrierechner, ausgebildet ist, welche mit den einzelnen Baugruppen der Ausrichtstation zur Datenübertragung gekoppelt ist. Von Vorteil ist hierbei, dass die Recheneinheit als zentrale Recheneinheit ausgebildet sein kann und sämtliche Anschlussdaten der verbauten Erfassungsmittel auswerten kann und entsprechende Steuerdaten an die Antriebseinheiten ausgeben kann. Darüber hinaus kann eine Recheneinheit Eingangs- bzw. Ausgangsschnittstellen zur vorgeschalteten bzw. nachgeschalteten Fördereinrichtungen aufweisen.

Beim Verfahren zum Ausrichten von in einem Fördersystem beförderten Fördergut, vorzugs- weise Gepäckstücken, ist vorgesehen, dass das Verfahren folgende Verfahrensschritte umfasst:
- Zufördern des Fördergutes an einer Zufördervorrichtung;
- Erfassen der Lage des zugeförderten Fördergutes mittels einem optischen Erfassungsmittel;
- Auswerten der Daten des optischen Erfassungsmittels und Berechnen der gewünschten Soll-Lage des Fördergutes;
- Vorausrichten des Fördergutes in einer Vororientierungsvorrichtung, wobei die Vororientierungsvorrichtung über dessen Breite gesehen zumindest zwei, vorzugsweise bandförmig umlaufende, Fördermittel aufweist und das Vorausrichten dadurch bewerkstelligt wird, dass die beiden Fördermittel, entsprechend einer Auswertung basierend auf Daten des optischen Erfassungsmittels, mit unterschiedlicher Vorschubgeschwindigkeit angetrieben werden und dadurch das Fördergut, welches an zumindest zwei der Fördermittel aufliegt, gedreht wird;
- Endausrichten des Fördergutes in einer anschließenden Hauptorientierungsvorrichtung, wobei die Hauptorientierungsvorrichtung eine seitliche Führungseinheit aufweist und weiters zumindest ein, vorzugsweise bandförmig umlaufendes, Fördermittel aufweist, welches in Förderrichtung gesehen in einem Winkel zur seitlichen Führungseinheit angeordnet ist, wobei das Fördergut von dem Fördermittel gegen die seitliche Führungseinheit gedrückt wird, und dadurch eine Seitenfläche des Fördergutes parallel zur seitlichen Führungseinheit ausgerichtet wird, wobei die Führungsfläche parallel zu einer Längserstreckung der Vororientierungsvorrichtung ausgerichtet ist und wobei das Fördermittel der Hauptorientierungsvorrichtung bezüglich dessen Förderrichtung in einem Winkel zur Führungsfläche ausgerichtet ist.

Von Vorteil an dem erfindungsgemäßen Verfahren ist, dass das zu orientierende Fördergut durch die Anwendung der einzelnen Verfahrensschritte möglichst genau ausgerichtet werden kann, sodass es in einer nachfolgenden Fördereinheit möglichst gut weiter verarbeitet werden kann. Darüber hinaus kann das erfindungsgemäße Verfahren eine möglichst hohe Taktzeit aufweisen, um eine große Anzahl von Fördergütern innerhalb einer vorgegebenen Zeit ausrichten zu können.

Weiters kann vorgesehen sein, dass während des Vorausrichten des Fördergutes die Lage des Fördergutes von einem weiteren optischen Erfassungsmittel erfasst wird und die Daten dieser Lageauswertung als Regelgröße in die Festlegung der Vorschubgeschwindigkeit der unterschiedlichen Fördermittel der Vororientierungsvorrichtung einbezogen werden. Von Vorteil ist hierbei, dass die Genauigkeit bzw. die Qualität der Ausrichtung des Fördergutes in der Vororientierungsvorrichtung verbessert werden kann. Dies ist insbesondere notwendig, wenn verschiedenartige geformte Fördergüter, beispielsweise Hartschalenkoffer mit einer bauchigen Auflagefläche, entsprechend ausgerichtet werden sollen.

Gemäß einer besonderen Ausprägung ist es möglich, dass die Zufördervorrichtung mit einer konstanten Fördergeschwindigkeit betrieben wird. Von Vorteil ist hierbei, dass dabei die geometrische Form des Fördergutes vereinfacht bestimmt werden kann.

Schließlich kann vorgesehen sein, dass die gewünschte Soll-Lage des Fördergutes derart berechnet wird, dass eine Längsseite des Fördergutes annähernd parallel zur seitlichen Führungseinheit der Hauptorientierungsvorrichtung ausgerichtet wird. Von Vorteil ist hierbei, dass anschließend die Längsseite des Fördergutes an die seitliche Führungseinheit der Hauptorientierungsvorrichtung zur Anlage gebracht wird und somit sämtliche Fördergüter derart ausgerichtet werden, dass sie in Förderrichtung gesehen mit einer Breitseite voraus befördert werden.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer Ausrichtstation;
- Fig. 2: eine Draufsicht auf die Ausrichtstation;
- Fig. 3: eine Seitenansicht der Ausrichtstation;
- Fig. 4: eine perspektivische Ansicht einer Vororientierungsvorrichtung von schräg unten;
- Fig. 5: eine Schnittdarstellung der Vororientierungsvorrichtung gemäß der Schnittlinie V-V in den Figuren 3 und 4.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

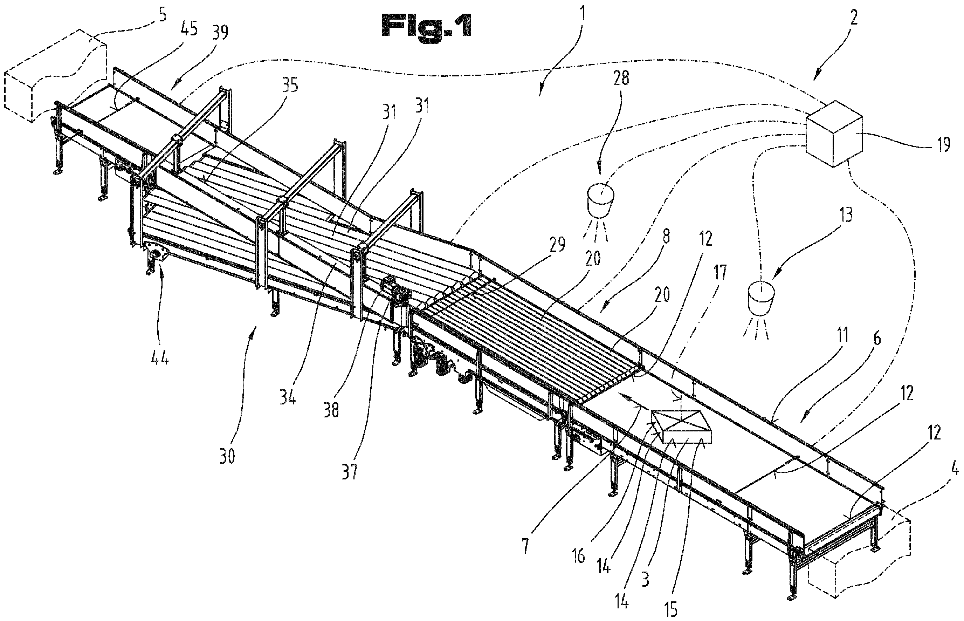

Die folgende Beschreibung ist der Übersichtlichkeit halber nach Bauteilen gegliedert, wobei die Figuren 1 bis 5 gleichermaßen zur Beschreibung der Bauteile herangezogen werden und wobei eine Zusammenschau der einzelnen Figuren verwendet wird, bzw. zwischen den einzelnen Figuren in deren Reihenfolge variiert wird. Darüber hinaus kann es vorkommen, dass einzelne Bauteile in einzelnen Figuren der Übersichtlichkeit halber nicht mit einem Bezugszeichen versehen wurden.
Fig. 1 zeigt eine perspektivische Ansicht einer Ausrichtstation 1, welche in ein Fördersystem 2 eingebunden werden kann, um Fördergut 3 in dessen Lage ausrichten zu können.

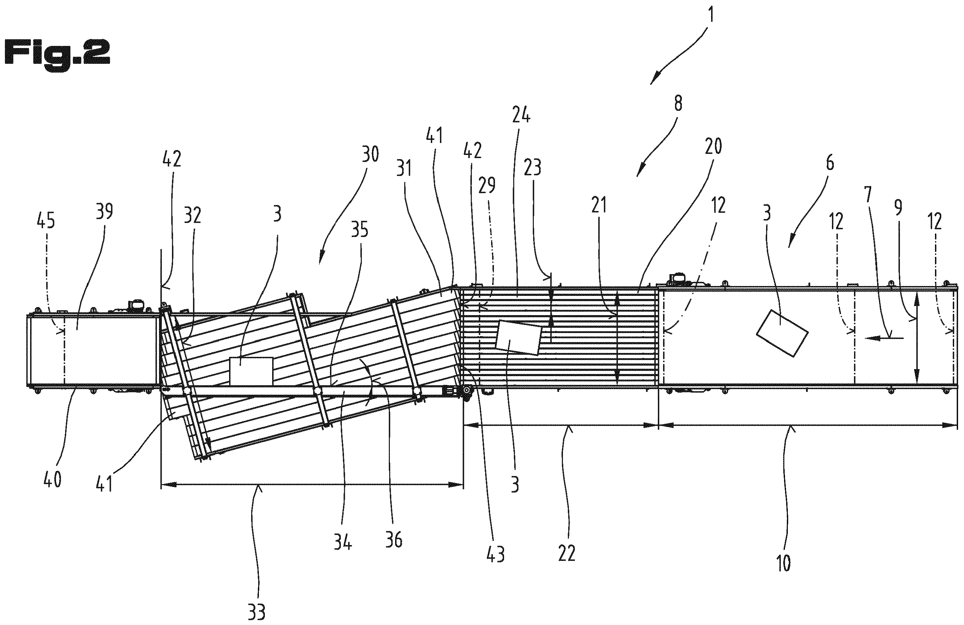

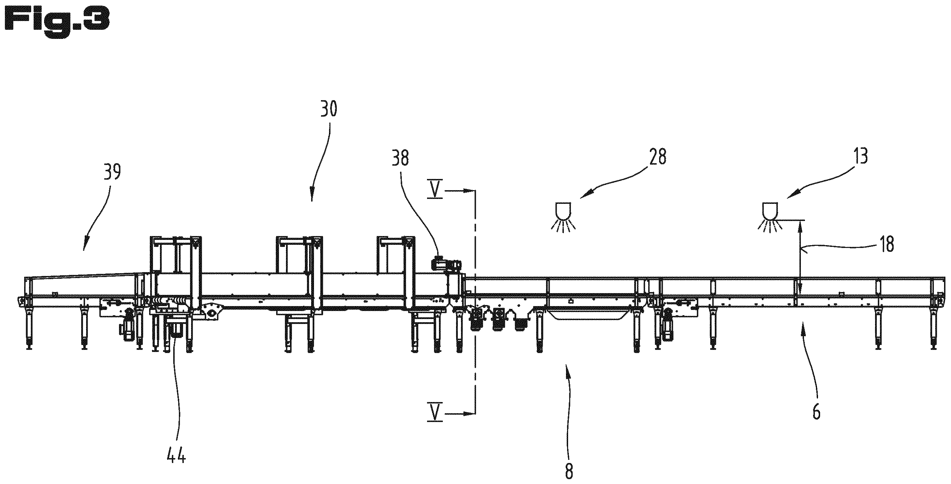

Fig. 2 zeigt eine Draufsicht und Fig. 3 eine Seitenansicht der Ausrichtstation 1.

In den Figuren 1 bis 5 ist ein Ausführungsbeispiel der Ausrichtstation 1 dargestellt und beschrieben, wobei einzelne Unterausführungsvarianten zeichnerisch nicht dargestellt wurden, sondern in kurzen Ausführungsbeispielen beschrieben wurden. Die einzelnen Unterausführungsvarianten können natürlich miteinander kombiniert werden, um zu einer vorteilhaften Gesamtausführung zu gelangen.

Die Ausrichtstation 1 kann beispielsweise in einem Fördersystem 2 eingesetzt werden, welches etwa an einem Flughafen zum Fördern von Gepäckstücken dient. Insbesondere kann vorgesehen sein, dass vor der Ausrichtstation 1 eine vorgeschaltete Fördervorrichtung 4 ausgebildet ist, welche beispielsweise die Gepäckstücke an einem Aufgabeschalter zur Ausrichtstation 1 transportiert. Außerdem kann vorgesehen sein, dass nach der Ausrichtstation 1 eine nachgeschaltete Fördervorrichtung 5 ausgebildet ist, an welche das ausgerichtete Fördergut 3 von der Ausrichtstation 1 übergeben wird. Die nachgeschaltete Fördervorrichtung 5 kann beispielsweise zu einem Röntgenapparat führen, bei welchem es notwendig ist, dass das Fördergut 3 ordnungsgemäß ausgerichtet ist.

Wie aus Fig. 1 ersichtlich, kann vorgesehen sein, dass die Ausrichtstation 1 eine Zufördervorrichtung 6 aufweist, in welcher das Fördergut 3 einer in Förderrichtung 7 nachgeschalteten Vororientierungsvorrichtung 8 angedient wird.

Die Zufördervorrichtung 6 weist eine Breite 9 auf, welche auch als Breiterstreckung bezeichnet werden kann. Darüber hinaus weist die Zufördervorrichtung 6 eine Länge 10 auf, welche auch als Längserstreckung bezeichnet werden kann. Die Förderrichtung 7 ergibt sich aus der Verfahrbewegung des Fördergutes 3 in Längserstreckung der Zufördervorrichtung 6. Die Förderrichtung 7 ist daher parallel zu einer Längsseite 11 der Zufördervorrichtung 6 ausgerichtet.

Wie aus Fig. 1 weiters ersichtlich, kann vorgesehen sein, dass die Zufördervorrichtung 6 einen oder mehrere Lichtschranken 12 aufweist, mittels welchen ein Einfahren des Fördergutes 3 in die Zufördervorrichtung 6 erkannt werden kann.

Die Zufördervorrichtung 6 ist vorzugsweise in Form eines Bandförderers ausgebildet. Ein derartiger Bandförderer kann beispielsweise durch einen Fördergurt gebildet sein, welcher hauptsächlich aus einem Gummimaterial besteht. In einer alternativen Ausführungsvariante ist es auch denkbar, dass die Zufördervorrichtung 6 beispielsweise als Rollenförderer oder als sonstige Fördereinheit ausgebildet ist.

Weiters kann vorgesehen sein, dass im Bereich der Zufördervorrichtung 6 ein optisches Erfassungsmittel 13 angeordnet ist, welches zum Erfassen der Lage des Fördergutes 3 ausgebildet ist.

Als Lage im Sinne dieses Dokumentes wird eine Kombination von Position und Orientierung verstanden.

Insbesondere kann vorgesehen sein, dass das optische Erfassungsmittel 13 eine Außenkontur des Fördergutes 3 und somit dessen projizierte Grundfläche erkennt. Insbesondere wird eine die Außenkontur vorgebende Seitenfläche 14 des Fördergutes 3 erkannt und dadurch die Lage des Fördergutes 3 bestimmt. Die Seitenflächen 14 können bei einem annähernd rechteckigen Fördergut 3 weiter spezifiziert werden in eine Längsseite 15, welche die größere Erstreckung aufweist, und eine Breitseite 16, welche die geringere Erstreckung aufweist. Durch das optische Erfassungsmittel 13 kann, wie bereits erläutert, die Außenkontur des Fördergutes 3 erfasst werden und somit das flächige Zentrum der Außenkontur oder Grundfläche bzw. eine durch dieses Zentrum verlaufende Hochachse 17 berechnet werden.

Das optische Erfassungsmittel 13 ist vorzugsweise mittig der Breite 9 der Zufördervorrichtung 6 über der Zufördervorrichtung 6 angeordnet. Hierbei kann vorgesehen sein, dass ein Abstand 18 zwischen der Zufördervorrichtung 6 und dem optischen Erfassungsmittel 13 zwischen 500 mm und 5000 mm, insbesondere zwischen 1000 mm und 3000 mm, bevorzugt zwischen 1500 mm und 2500 mm beträgt. Der Abstand 18 wird insbesondere ausgehend von einer Förderoberfläche oder Auflagefläche der Zufördervorrichtung 6 bestimmt.

Vorzugsweise ist das optische Erfassungsmittel 13 in Förderrichtung 7 gesehen so positioniert, dass es das Fördergut 3 bereits auf Höhe der Zufördervorrichtung 6 erfassen kann. In einer Alternativvariante kann auch vorgesehen sein, dass das optische Erfassungsmittel 13 in einem Übergangsbereich zwischen Zufördervorrichtung 6 und Vororientierungsvorrichtung 8 angeordnet ist.

Von der Zufördervorrichtung 6 wird das Fördergut 3 auf die Vororientierungsvorrichtung 8 übergeben bzw. weitergefördert.

In der Vororientierungsvorrichtung 8 wird das Fördergut 3 auf Basis der berechneten Daten, welche vom optischen Erfassungsmittel 13 erfasst wurden und in einer Recheneinheit 19 verarbeitet wurden, bezüglich seiner Hochachse 17 gedreht. Dies wird dadurch erreicht, dass die Vororientierungsvorrichtung 8 zumindest zwei Fördermittel 20 aufweist, welche über die Breite 21 der Vororientierungsvorrichtung 8 gesehen nebeneinander angeordnet sind und sich über die Länge 22 der Vororientierungsvorrichtung erstrecken. Das Fördergut 3 liegt dabei an den zumindest zwei Fördermittel 20 der Vororientierungsvorrichtung 8 auf und wird dadurch gedreht, dass die beiden Fördermittel 20 eine unterschiedliche Vorschubgeschwindigkeit aufweisen.

Je kleiner eine Breite 23 der Fördermittel 20 ist bzw. je mehr Fördermittel 20 über die Breite 21 der Vororientierungsvorrichtung 8 verteilt sind, desto besser können auch kleine Fördergüter 3 bzw. Fördergüter 3 mit einer gewölbten Auflagefläche gedreht werden. Derartige Fördergüter 3 mit einer gewölbten Auflagefläche sind beispielsweise Hartschalenkoffer. Eine Breite 23 der Fördermittel 20 ist vorzugsweise weniger als ein Zehntel der Breite 21 der Vororientierungsvorrichtung 8.

Die Fördermittel 20 sind vorzugsweise in Form von bandförmig umlaufenden Fördermittel ausgebildet. Dies können beispielsweise Gliederketten, ein flacher Fördergurt, ein Zahnriemen, umlaufende Seile oder sonstige Fördermittel sein.

Weiters kann vorgesehen sein, dass zwischen den einzelnen Fördermitteln 20 Zwischenstege 24 angeordnet sind, welche zur Abtrennung bzw. zur Führung der einzelnen Fördermittel 20 dienen.

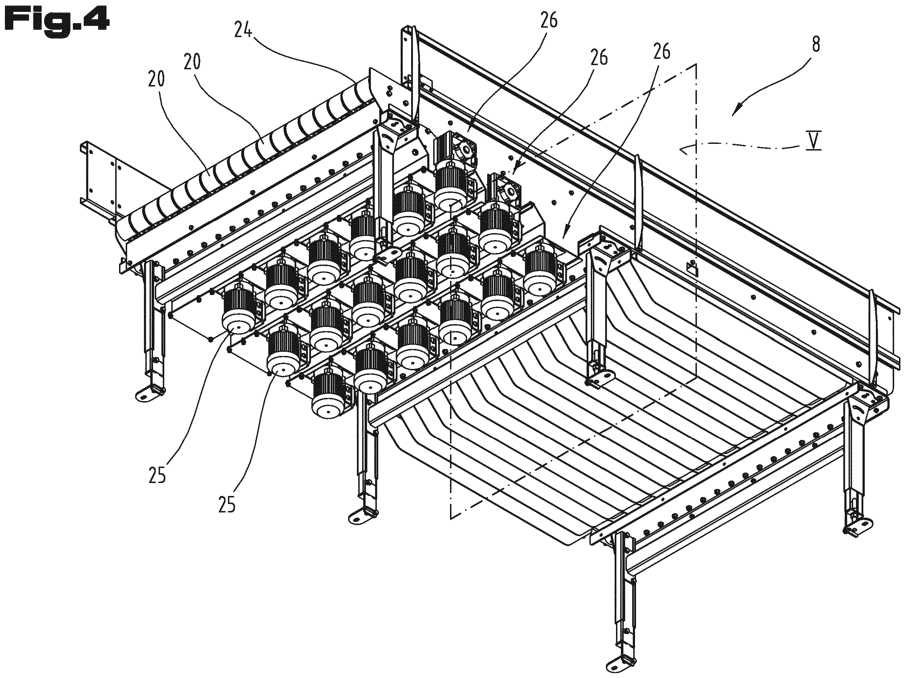

Fig. 4 zeigt eine Ansicht von unten eines Ausführungsbeispiels einer Vororientierungsvorrichtung 8.

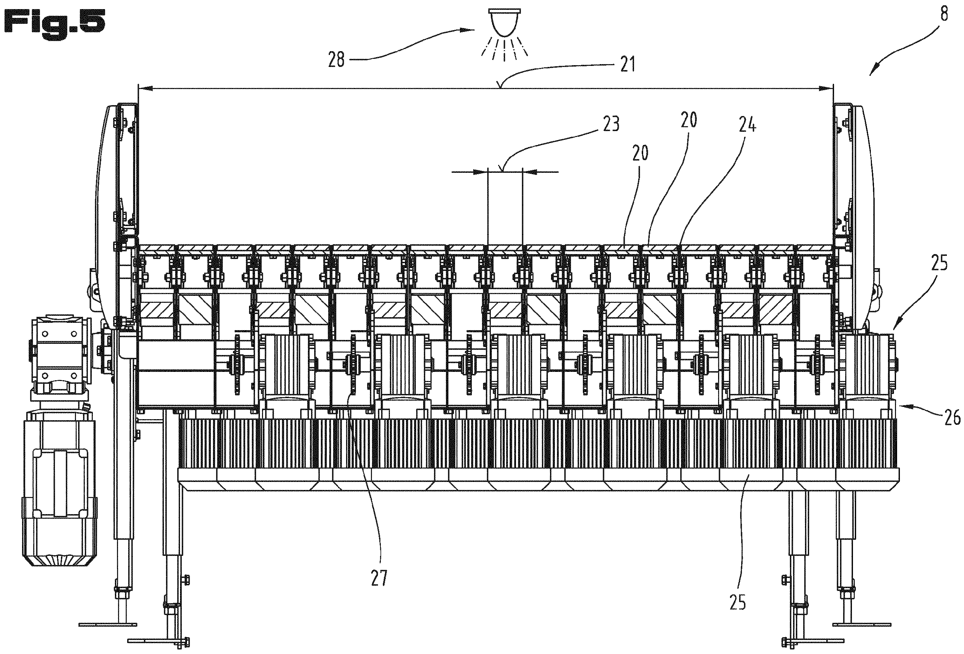

Fig. 5 zeigt eine Schnittdarstellung der Vororientierungsvorrichtung 8 gemäß der Schnittlinie V - V aus den Figuren 3 und 4.

Wie besonders gut in einer Zusammenschau der Fig. 4 und 5 ersichtlich, kann vorgesehen sein, dass jedem der Fördermittel 20 der Vororientierungsvorrichtung 8 eine eigene Antriebseinheit 25 zugeordnet ist, durch welche sämtliche Fördermittel 20 unabhängig voneinander angetrieben werden können. Dadurch können die einzelnen Fördermittel 20 eine unterschiedliche Verfahrgeschwindigkeit aufweisen. Wie besonders gut in Fig. 5 ersichtlich, kann vorgesehen sein, dass die einzelnen Antriebseinheiten 25 einen Antriebsmotor und gegebenenfalls ein Untersetzungsgetriebe aufweisen können.

Wenn eine große Anzahl von Fördermitteln 20 in der Vororientierungsvorrichtung 8 verbaut ist bzw. die Fördermittel 20 eine geringe Breite 23 aufweisen, kann es notwendig sein, dass aus Platzgründen die Antriebseinheiten 25 jeweils in einer Reihe 26 angeordnet sind, wobei die einzelnen Reihen 26 geringfügig zueinander versetzt sind. Dadurch kann erreicht werden, dass, wie besonders gut in Fig. 5 ersichtlich, in der ersten Reihe 26 beispielsweise nur jedes dritte Fördermittel 20 von einer Antriebseinheit 25 der ersten Reihe 26 angetrieben wird und dass die restlichen Fördermittel 20 analog zur ersten Reihe 26 durch in den weiteren Reihen 26 angeordnete Antriebseinheiten 25 angetrieben werden.

Die einzelnen Antriebseinheiten 25 können beispielsweise Zahnräder 27 aufweisen, welche in die Fördermittel 20 eingreifen und diese antreiben.

Weiters kann ein weiteres optisches Erfassungsmittel 28 vorgesehen sein, welches im Bereich der Vororientierungsvorrichtung 8 angeordnet sein kann. Das weitere optische Erfassungsmittel 28 kann analog zum optischen Erfassungsmittel 13 mittig der Breite 21 der Vororientierungsvorrichtung 8 bzw. in einem gewissen Abstand zu dieser angeordnet sein. Das weitere optische Erfassungsmittel 28 kann dazu dienen, um während des Orientierungsvorganges in der Vororientierungsvorrichtung 8 die aktuelle Lage des Fördergutes 3 zu erfassen. Gegebenenfalls kann die Recheneinheit 19 die Steuerbefehle an die Vororientierungsvorrichtung 8 auf Basis der Daten des weiteren optischen Erfassungsmittels 28 in Form eines Regelkreises korrigieren.

Weiters kann ein Lichtschranken 29 ausgebildet sein, mittels welchem der Durchgang des Fördergutes 3 am Ende der Vororientierungsvorrichtung 8 erfasst werden kann.

Weiters kann in Förderrichtung 7 gesehen, anschließend an die Vororientierungsvorrichtung 8 eine Hauptorientierungsvorrichtung 30 vorgesehen sein, welche zum Endausrichten des Fördergutes 3 ausgebildet ist.

Die Hauptorientierungsvorrichtung 30 kann zumindest ein Fördermittel 31 aufweisen, welches sich über die Breite 32 der Hauptorientierungsvorrichtung 30 bzw. die Länge 33 der Hauptorientierungsvorrichtung 30 erstreckt. Insbesondere ist vorgesehen, dass die Hauptorientierungsvorrichtung 30 eine seitliche Führungseinrichtung 34 aufweist, in welcher eine Führungsfläche 35 ausgebildet ist. Die Führungsfläche 35 bildet eine Anlagefläche, welche dem Zentrum der Hauptorientierungsvorrichtung 30 zugewandt ist. Die Führungsfläche 35 ist parallel zur Längserstreckung 22 der Vororientierungsvorrichtung 8 ausgerichtet.

Weiters ist vorgesehen, dass das Fördermittel 31 der Hauptorientierungsvorrichtung 30 bezüglich dessen Förderrichtung in einem Winkel 36 zur Führungsfläche 35 ausgerichtet ist. Durch diese Ausgestaltung wird erreicht, dass ein Fördergut 3, welches bereits in der Vororientierungsvorrichtung 8 grob ausgerichtet wurde, von der Vororientierungsvorrichtung 8 auf die Hauptorientierungsvorrichtung 30 übergeben werden kann und dort durch die Schrägstellung des Fördermittels 31 gegen die seitliche Führungseinheit 34, insbesondere die Führungsfläche 35 derselben, gedrückt wird.

Dadurch ergibt sich eine weitere Ausrichtung des Fördergutes 3, wobei eine Seitenfläche 14 des Fördergutes 3 parallel zur Führungsfläche 35 der seitlichen Führungseinheit 34 ausgerichtet wird.

Um das Fördergut 3 möglichst wenig zu beschädigen, kann vorgesehen sein, dass die seitliche Führungseinheit 34 ein umlaufendes Band 37 aufweist, welches synchron mit dem Fördergut 3 mitlaufen kann. In dieser Ausführungsvariante wird die Führungsfläche 35 der seitlichen Führungseinheit 34 durch das umlaufende Band 37 gebildet.

Wenn keine Relativgeschwindigkeit bzw. Relativbewegung zwischen umlaufenden Band 37 und der Seitenfläche 14 des Fördergutes 3 auftritt, so kann der Verschleiß des Fördergutes 3 möglichst gering gehalten werden.

In einer Weiterbildung kann vorgesehen sein, dass das umlaufende Band 37 der seitlichen Führungseinheit 34 aktiv von einem Antriebsmotor 38 angetrieben wird.

In einer weiteren nicht dargestellten Ausführungsvariante kann vorgesehen sein, dass die seitliche Führungseinheit 34 mehrere Laufrollen aufweist, welche zum Führen des Fördergutes 3 dienen. Derartige Laufrollen können analog zum umlaufenden Band 37 aktiv angetrieben werden oder frei mitlaufend gelagert sein.

In einer weiteren nicht dargestellten Ausführungsvariante kann vorgesehen sein, dass die seitliche Führungseinheit 34 nur durch eine Rutschwand gebildet ist, an welcher das Fördergut 3 entlang schleift.

Wie aus Fig. 2 ersichtlich, kann vorgesehen sein, dass die Führungsfläche 35 der seitlichen Führungseinheit 34 zu einer Nachfördereinheit 39, insbesondere zu einer Seitenwand 40 der Nachfördereinheit 39 bündig ausgerichtet ist. Weiters kann auch vorgesehen sein, dass eine Nachfördereinheit 39 versetzt angeordnet ist, sodass die Seitenwand 40 der Nachfördereinheit 39 außerhalb der Führungsfläche 35 der seitlichen Führungseinheit 34 liegt und somit das Fördergut 3 nicht an der Seitenwand 40 der Nachfördereinheit 39 schleift.

Weiters kann vorgesehen sein, dass in der Hauptorientierungsvorrichtung 30 mehrere parallel zueinander verlaufende Fördermittel 31 ausgebildet sind, welche, wie besonders gut in Fig. 2 ersichtlich, im Bereich deren Enden, daher im Bereich von Umlenkrollen 41, gestuft zueinander angeordnet sind, sodass eine Abschlusskante 42 der Hauptorientierungsvorrichtung 30 im rechten Winkel zur Führungsfläche 35 der seitlichen Führungseinheit 34 angeordnet ist. Dadurch kann erreicht werden, dass die Schrägstellung der Fördermittel 31 im Übergabebereich von der Vororientierungsvorrichtung 8 bzw. zur Nachfördereinheit 39 möglichst ausgeglichen wird, sodass ein Förderspalt 43 zwischen den einzelnen Fördervorrichtungen möglichst gering gehalten werden kann, um das Fördergut 3 nicht zu beschädigen.

Wie besonders gut in Fig. 1 ersichtlich, kann vorgesehen sein, dass eine Antriebseinheit 44 der Hauptorientierungsvorrichtung 30 alle Fördermittel 31 gemeinsam antreibt. Hierbei kann vorgesehen sein, dass die Antriebseinheit 44 nicht direkt an den Umlenkrollen 41 angeordnet ist, sondern dass die Antriebseinheit 44 zwischen zwei in Längserstreckung 33 befindlichen Umlenkrollen angeordnet ist.

Die Fördermittel 31 der Hauptorientierungsvorrichtung 30 können analog zu den Fördermittel 20 der Vororientierungsvorrichtung 8 durch verschiedenste Arten von Fördermittel gebildet sein.

Weiters kann vorgesehen sein, dass im Bereich der Nachfördereinheit 39 ebenfalls ein Lichtschranken 45 ausgebildet ist, durch welchen ein Durchgang von Fördergut 3 detektiert werden kann.

In Fig. 2 sind die einzelnen Schritte des Durchganges von Fördergut 3 durch die Ausrichtstation 1 exemplarisch dargestellt.

In der Zufördervorrichtung 6 wird die Ist-Lage des Fördergutes 3 erfasst und anschließend eine Soll-Lage berechnet. Von der Zufördervorrichtung 6 wird das Fördergut 3 an die Vororientierungsvorrichtung 8 übergeben und in dieser vorausgerichtet. Das vorausgerichtete Fördergut 3 wird anschließend an die Hauptorientierungsvorrichtung 30 übergeben und in dieser an die seitliche Führungseinheit 34 angedrückt und somit endausgerichtet. Über die optionale Nachfördereinheit 39 kann das Fördergut 3 anschließend zur weiteren Verarbeitung übergeben werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Ausrichtstation | 25 | Antriebseinheit Vororientierungsvorrichtung |
| 2 | Fördersystem | | |
| 3 | Fördergut | 26 | Reihe einer Antriebseinheit |
| 4 | Vorgeschaltete Fördervorrichtung | 27 | Zahnrad |
| 5 | Nachgeschaltete Fördervorrichtung | 28 | weiteres optisches Erfassungsmittel |
| 6 | Zufördervorrichtung | | |
| 7 | Förderrichtung | 29 | Lichtschranken Vororientierungsvorrichtung |
| 8 | Vororientierungsvorrichtung | | |
| 9 | Breite der Zufördervorrichtung | 30 | Hauptorientierungsvorrichtung |
| 10 | Länge der Zufördervorrichtung | 31 | Fördermittel der Hauptorientierungsvorrichtung |
| 11 | Längsseite Zufördervorrichtung | | |
| 12 | Lichtschranken Zufördervorrichtung | 32 | Breite der Hauptorientierungsvorrichtung |
| 13 | optisches Erfassungsmittel | 33 | Länge Hauptorientierungsvorrichtung |
| 14 | Seitenfläche des Fördergutes | | |
| 15 | Längsseite Fördergut | 34 | seitliche Führungseinheit der Hauptorientierungsvorrichtung |
| 16 | Breitseite Fördergut | | |
| 17 | Hochachse Fördergut | 35 | Führungsfläche der seitlichen Führungseinheit |
| 18 | Abstand Zufördervorrichtung - optisches Erfassungsmittel | | |
| | | 36 | Winkel zwischen dem Fördermittel und der seitlichen Führungseinheit der Hauptorientierungsvorrichtung |
| 19 | Recheneinheit | | |
| 20 | Fördermittel der Vororientierungsvorrichtung | | |
| | | 37 | umlaufendes Band der seitlichen Führungseinheit |
| 21 | Breite der Vororientierungsvorrichtung | | |
| | | 38 | Antriebsmotor seitliche Führungseinheit |
| 22 | Länge der Vororientierungsvorrichtung | | |
| | | 39 | Nachfördereinheit |
| 23 | Breite Fördermittel der Vororientierungsvorrichtung | 40 | Seitenwand Nachfördereinheit |
| | | 41 | Umlenkrollen |
| 24 | Zwischensteg | | |
| | | 42 | Abschlusskante der Hauptorientierungsvorrichtung |
| | | 43 | Förderspalt |
| | | 44 | Antriebseinheit der Hauptorientierungsvorrichtung |
| | | 45 | Lichtschranken Nachfördereinheit |

## Patentansprüche

1. Ausrichtstation (1) zum Ausrichten von in einem Fördersystem (2) beförderten Fördergut (3), vorzugsweise Gepäckstücken, die Ausrichtstation (1) umfassend:
eine Zufördervorrichtung (6) zum Zufördern des Fördergutes (3);
eine Vororientierungsvorrichtung (8) zum Ausrichten des Fördergutes (3), welche Vororientierungsvorrichtung (8) über dessen Breite (21) gesehen zumindest zwei, vorzugsweise bandförmig umlaufende, Fördermittel (20) aufweist, welche unabhängig voneinander antreibbar sind wobei
die Ausrichtstation (1) darüber hinaus eine Hauptorientierungsvorrichtung (30) zum Endausrichten des Fördergutes (3) umfasst, welche Hauptorientierungsvorrichtung (30) eine seitliche Führungseinheit (34) aufweist und weiters zumindest ein, vorzugsweise bandförmig umlaufendes, Fördermittel (31) aufweist, welches in Förderrichtung gesehen in einem Winkel (36) zur seitlichen Führungseinheit (34) angeordnet ist, sodass eine Seitenfläche (14) des Fördergutes (3) während dem Fördervorgang gegen eine Führungsfläche (35) der seitlichen Führungseinheit (34) gedrückt ist, wobei das Fördermittel (31) der Hauptorientierungsvorrichtung (30) bezüglich dessen Förderrichtung in einem Winkel (36) zur Führungsfläche (35) ausgerichtet ist, **dadurch gekennzeichnet, dass** die Führungsfläche (35) parallel zu einer Längserstreckung (22) der Vororientierungsvorrichtung (8) ausgerichtet ist, und dass die Ausrichtstation (1) ein optisches Erfassungsmittel (13) zum Erfassen der Lage des an der Zufördervorrichtung (6) geförderten Fördergutes (3) umfasst.

2. Ausrichtstation nach Anspruch 1, **dadurch gekennzeichnet, dass** das optische Erfassungsmittel (13), vorzugsweise zentral bezüglich der Breite (9) der Zufördervorrichtung (6), über der Zufördervorrichtung (6) angeordnet ist.

3. Ausrichtstation nach einem der vorhergehenden Ansprüche, **dadurch gekennzeichnet, dass** ein weiteres optisches Erfassungsmittel (28) ausgebildet ist, welches, vorzugsweise zentral bezüglich der Breite (21) der Vororientierungsvorrichtung (8), über der Vororientierungsvorrichtung (8) angeordnet ist.

4. Ausrichtstation nach einem der vorhergehenden Ansprüche, **dadurch gekennzeichnet, dass** die Fördermittel (20) der Vororientierungsvorrichtung (8) eine Breite (23) zwischen 200mm und 5mm, insbesondere zwischen 150mm und 10mm, bevorzugt zwischen 70mm und 20mm aufweisen.

5. Ausrichtstation nach einem der vorhergehenden Ansprüche, **dadurch gekennzeichnet, dass** die Vororientierungsvorrichtung (8) über deren Breite (21) verteilt zwischen 5 und 30, insbesondere zwischen 10 und 25, bevorzugt zwischen 15 und 25 Fördermittel (20) aufweist.

6. Ausrichtstation nach einem der vorhergehenden Ansprüche, **dadurch gekennzeichnet, dass** zwischen den einzelnen Fördermitteln (20) der Vororientierungsvorrichtung (8) ein Zwischensteg (24) angeordnet ist, der die einzelnen Fördermittel (20) voneinander trennt.

7. Ausrichtstation nach einem der vorhergehenden Ansprüche, **dadurch gekennzeichnet, dass** jedes der einzelnen Fördermittel (20) der Vororientierungsvorrichtung (8) von einer eigenen Antriebseinheit (25) angetrieben wird, wobei die Geschwindigkeit der einzelnen Antriebseinheiten (25) stufenlos regelbar ist.

8. Ausrichtstation nach Anspruch 7, **dadurch gekennzeichnet, dass** die Antriebseinheiten (25) in Längserstreckung (22) der Vororientierungsvorrichtung (8) gesehen reihenweise an dieser angeordnet sind, wobei in Abhängigkeit von der Anzahl n der Reihen (26), jedes im Abstand n-1 befindliche Fördermittel (20) von den in einer Reihe (26) angeordneten Antriebseinheiten (25) antreibbar ist.

9. Ausrichtstation nach einem der vorhergehenden Ansprüche, **dadurch gekennzeichnet, dass** die seitliche Führungseinheit (34) der Hauptorientierungsvorrichtung (30) ein umlaufendes Band (37) aufweist.

10. Ausrichtstation nach Anspruch 9, **dadurch gekennzeichnet, dass** das umlaufende Band (37) der seitlichen Führungseinheit (34) der Hauptorientierungsvorrichtung (30) mit einem Antriebsmotor (38) gekoppelt ist.

11. Ausrichtstation nach einem der vorhergehenden Ansprüche, **dadurch gekennzeichnet, dass** der Winkel (36) zwischen dem Fördermittel (31) und der seitlichen Führungseinheit (34) der Hauptorientierungsvorrichtung (30) zwischen 2° und 45°, insbesondere zwischen 5° und 30°, bevorzugt zwischen 8° und 20° beträgt.

12. Ausrichtstation nach einem der vorhergehenden Ansprüche, **dadurch gekennzeichnet, dass** die Hauptorientierungsvorrichtung (30) mehrere über die Breite (32) verteilte, bandförmig umlaufende, Fördermittel (31) aufweist, welche von einer gemeinsamen Antriebseinheit (44) angetrieben werden, wobei die Umlenkrollen (41) der einzelnen bandförmig umlaufenden Fördermittel (31) derart gestuft zueinander angeordnet sind, dass von den Umlenkrollen (41) eine im rechten Winkel zur seitlichen Führungseinheit (34) angeordnete Abschlusskante (42) ausgebildet ist.

13. Ausrichtstation nach Anspruch 12, **dadurch gekennzeichnet, dass** die gemeinsame Antriebseinheit (44) zwischen Umlenkrollen (41) der Hauptorientierungsvorrichtung (30) angeordnet ist.

14. Verfahren zum Ausrichten von in einem Fördersystem (2) beförderten Fördergut (3), vorzugsweise Gepäckstücken, insbesondere unter Verwendung einer Ausrichtstation (1) nach einem der vorhergehenden Ansprüche, das Verfahren umfassend folgende Verfahrensschritte:
- Zufördern des Fördergutes (3) an einer Zufördervorrichtung (6);
- Erfassen der Lage des zugeförderten Fördergutes (3) mittels einem optischen Erfassungsmittel (13);
- Auswerten der Daten des optischen Erfassungsmittels (13) und Berechnen der gewünschten Soll-Lage des Fördergutes (3);
- Vorausrichten des Fördergutes (3) in einer Vororientierungsvorrichtung (8), wobei die Vororientierungsvorrichtung (8) über dessen Breite (21) gesehen zumindest zwei, vorzugsweise bandförmig umlaufende, Fördermittel (20) aufweist und das Vorausrichten dadurch bewerkstelligt wird, dass die beiden Fördermittel (20), entsprechend einer Auswertung basierend auf Daten des optischen Erfassungsmittels (13), mit unterschiedlicher Vorschubgeschwindigkeit angetrieben werden und dadurch das Fördergut (3), welches an zumindest zwei der Fördermittel (20) aufliegt, in Richtung seiner Soll-Lage gedreht wird; wobei in einer anschließenden Hauptorientierungsvorrichtung (30) das Fördergut (3) endausgerichtet wird, wobei die Hauptorientierungsvorrichtung (30) eine seitliche Führungseinheit (34) aufweist und weiters zumindest ein, vorzugsweise bandförmig umlaufendes, Fördermittel (31) aufweist, welches in Förderrichtung gesehen in einem Winkel (36) zur seitlichen Führungseinheit (34) angeordnet ist, wobei das Fördergut (3) von dem Fördermittel (31) gegen eine Führungsfläche (35) der seitlichen Führungseinheit (34) gedrückt wird, und dadurch eine Seitenfläche (14) des Fördergutes (3) parallel zur Führungsfläche (35) der seitlichen Führungseinheit (34) ausgerichtet wird, wobei die Führungsfläche (35) parallel zu einer Längserstreckung (22) der Vororientierungsvorrichtung (8) ausgerichtet ist und wobei das Fördermittel (31) der Hauptorientierungsvorrichtung (30) bezüglich dessen Förderrichtung in einem Winkel (36) zur Führungsfläche (35) ausgerichtet ist.

15. Verfahren nach Anspruch 14, **dadurch gekennzeichnet, dass** während des Vorausrichten des Fördergutes (3) die Lage des Fördergutes (3) von einem weiteren optischen Erfassungsmittel (28) erfasst wird und die Daten dieser Lageauswertung als Regelgröße in die Festlegung der Vorschubgeschwindigkeit der unterschiedlichen Fördermittel (20) der Vororientierungsvorrichtung (8) einbezogen werden.

## Claims

1. Alignment station (1) for aligning conveyed goods (3), preferably pieces of luggage, transported in a conveyor system (2), the alignment station (1) comprising:
a feed device (6) for feeding the conveyed goods (3);
a pre-orientation device (8) for aligning the conveyed goods (3), which pre-orientation device (8), viewed over the width (21) thereof, has at least two conveying means (20) which circulate preferably in the form of a belt and which can be driven independently of one another,
the alignment station (1) also comprising a main orientation device (30) for the end alignment of the conveyed goods (3), which main orientation device (30) has a lateral guide unit (34) and also has at least one conveying means (31) which circulates preferably in the form of a belt and which, viewed in the conveying direction, is arranged at an angle (36) to the lateral guide unit (34) so that a lateral surface (14) of the conveyed goods (3) is pressed against a guide surface (35) of the lateral guide unit (34) during the conveying process, the conveying means (31) of the main orientation device (30) being aligned, with respect to its conveying direction, at an angle (36) to the guide surface (35), **characterized in that** the guide surface (35) is aligned in parallel with a longitudinal extension (22) of the pre-orientation device (8), and **in that** the alignment station (1) has an optical detection means (13) for detecting the position of the conveyed goods (3) conveyed on the feed device (6).

2. Alignment station according to claim 1, **characterized in that** the optical detection means (13) is arranged above the feed device (6), preferably centrally with respect to the width (9) of the feed device (6).

3. Alignment station according to either of the preceding claims, **characterized in that** a further optical detection means (28) is formed which is arranged above the pre-orientation device (8), preferably centrally with respect to the width (21) of the pre-orientation device (8).

4. Alignment station according to any of the preceding claims, **characterized in that** the conveying means (20) of the pre-orientation device (8) have a width (23) between 200 mm and 5 mm, in particular between 150 mm and 10 mm, preferably between 70 mm and 20 mm.

5. Alignment station according to any of the preceding claims, **characterized in that** the pre-orientation device (8) has between 5 and 30, in particular between 10 and 25, preferably between 15 and 25 conveying means (20) distributed over its width (21).

6. Alignment station according to any of the preceding claims, **characterized in that** an intermediate strip (24) is arranged between the individual conveying means (20) of the pre-orientation device (8), which strip separates the individual conveying means (20) from one another.

7. Alignment station according to any of the preceding claims, **characterized in that** each of the individual conveying means (20) of the pre-orientation device (8) is driven by its own drive unit (25), the speed of the individual drive units (25) being continuously adjustable.

8. Alignment station according to claim 7, **characterized in that** the drive units (25) are arranged in rows on the pre-orientation device (8) as seen in the longitudinal extension (22) thereof, and it being possible, depending on the number n of rows (26), for each conveying means (20) located at a distance n-1 to be driven by the drive units (25) arranged in a row (26).

9. Alignment station according to any of the preceding claims, **characterized in that** the lateral guide unit (34) of the main orientation device (30) has a circulating belt (37).

10. Alignment station according to claim 9, **characterized in that** the circulating belt (37) of the lateral guide unit (34) of the main orientation device (30) is coupled to a drive motor (38).

11. Alignment station according to any of the preceding claims, **characterized in that** the angle (36) between the conveying means (31) and the lateral guide unit (34) of the main orientation device (30) is between 2° and 45°, in particular between 5° and 30°, preferably between 8° and 20°.

12. Alignment station according to any of the preceding claims, **characterized in that** the main orientation device (30) has a plurality of conveying means (31) which are distributed over the width (32) and circulate in the form of a belt, and which are driven by a common drive unit (44), the deflection rollers (41) of the individual conveying means (31) circulating in the form of a belt being arranged in a stepped manner with respect to one another such that the deflection rollers (41) form a terminating edge (42) arranged at a right angle to the lateral guide unit (34).

13. Alignment station according to claim 12, **characterized in that** the common drive unit (44) is arranged between deflection rollers (41) of the main orientation device (30).

14. Method for aligning conveyed goods (3), preferably pieces of luggage, transported in a conveyor system (2), in particular using an alignment station (1) according to any of the preceding claims, the method comprising the following method steps:
- feeding the conveyed goods (3) on a feed device (6);
- detecting the position of the fed goods (3) by means of an optical detection means (13);
- evaluating the data from the optical detection means (13) and calculating the desired target position of the conveyed goods (3);
- pre-aligning the conveyed goods (3) in a pre-orientation device (8), wherein the pre-orientation device (8), viewed over the width (21) thereof, has at least two conveying means (20) which circulate preferably in the form of a belt, and the pre-alignment is achieved by the two conveying means (20) being driven at different feed speeds according to an evaluation based on data from the optical detection means (13), and thereby the conveyed goods (3), which rest on at least two of the conveying means (20), are rotated in the direction of their target position;
wherein the conveyed goods (3) are end-aligned in an adjoining main orientation device (30), wherein the main orientation device (30) has a lateral guide unit (34) and also has at least one conveying means (31) which circulates preferably in the form of a belt and which, viewed in the conveying direction, is arranged at an angle (36) to the lateral guide unit (34), wherein the conveyed goods (3) are pressed by the conveying means (31) against a guide surface (35) of the lateral guide unit (34), and thereby a lateral surface (14) of the conveyed goods (3) is aligned in parallel with the guide surface (35) of the lateral guide unit (34), wherein the guide surface (35) is aligned in parallel with a longitudinal extension (22) of the pre-orientation device (8) and wherein the conveying means (31) of the main orientation device (30) is aligned, with respect to its conveying direction, at an angle (36) to the guide surface (35).

15. Method according to claim 14, **characterized in that**, during the pre-alignment of the conveyed goods (3), the position of the conveyed goods (3) is detected by a further optical detection means (28) and the data from this position evaluation are included as a controlled variable in the determination of the feed speed of the different conveying means (20) of the pre-orientation device (8).

## Revendications

1. Station d'alignement (1) permettant d'aligner un article transporté (3) - de préférence des bagages - transporté(s) dans un système de transport (2), la station d'alignement (1) comprenant :
un dispositif d'amenée (6) servant à amener l'article transporté (3) ;
un dispositif de préorientation (8) servant à aligner l'article transporté (3), lequel dispositif de préorientation (8), vu dans le sens de sa largeur (21), présente au moins deux moyens de transport tournants (20), de préférence en forme de bande, lesquels moyens de transport peuvent être entraînés indépendamment l'un de l'autre,
où la station d'alignement (1) comprend en outre un dispositif d'orientation principale (30) servant à l'alignement final de l'article transporté (3), lequel dispositif d'orientation principale (30) présente une unité de guidage latérale (34) et, en outre, au moins un moyen de transport tournant (31), de préférence en forme de bande, moyen de transport qui, vu dans la direction de transport, est disposé suivant un angle (36) formé par rapport à l'unité de guidage latérale (34), de sorte qu'une surface latérale (14) de l'article transporté (3) est, pendant le processus de transport, pressée contre une surface de guidage (35) de l'unité de guidage latérale (34), où le moyen de transport (31) du dispositif d'orientation principale (30) est aligné, concernant la direction de transport dudit moyen de transport, suivant un angle (36) formé par rapport à la surface de guidage (35),
**caractérisée en ce que** la surface de guidage (35) est alignée parallèlement à une étendue longitudinale (22) du dispositif de préorientation (8), et **en ce que** la station d'alignement (1) comprend un élément de détection optique (13) servant à détecter la position de l'article (3) transporté jusqu'au dispositif d'amenée (6).

2. Station d'alignement selon la revendication 1, **caractérisée en ce que** l'élément de détection optique (13) est disposé au-dessus du dispositif d'amenée (6), de préférence de façon centrale par rapport à la largeur (9) du dispositif d'amenée (6).

3. Station d'alignement selon l'une des revendications précédentes, **caractérisée en ce qu'**un autre élément de détection optique (28) est conçu, lequel élément de détection est disposé au-dessus du dispositif de préorientation (8), de préférence de façon centrale par rapport à la largeur (21) du dispositif de préorientation (8).

4. Station d'alignement selon l'une quelconque des revendications précédentes, **caractérisée en ce que** les moyens de transport (20) du dispositif de préorientation (8) présentent une largeur (23) comprise entre 200 mm et 5 mm, en particulier comprise entre 150 mm et 10 mm, de préférence comprise entre 70 mm et 20 mm.

5. Station d'alignement selon l'une quelconque des revendications précédentes, **caractérisée en ce que** le dispositif de préorientation (8) présente, répartis sur sa largeur (21), entre 5 et 30, en particulier entre 10 et 25, de préférence entre 15 et 25 moyens de transport (20).

6. Station d'alignement selon l'une quelconque des revendications précédentes, **caractérisée en ce qu'**une barrette intercalaire (24) est disposée entre les différents moyens de transport (20) du dispositif de préorientation (8), laquelle barrette intercalaire sépare les différents moyens de transport (20), les uns des autres.

7. Station d'alignement selon l'une quelconque des revendications précédentes, **caractérisée en ce que** chacun des différents moyens de transport (20) du dispositif de préorientation (8) est entraîné par une propre unité d'entraînement (25), où la vitesse des différentes unités d'entraînement (25) est réglable en continu.

8. Station d'alignement selon la revendication 7, **caractérisée en ce que** les unités d'entraînement (25), vues suivant l'étendue longitudinale (22) du dispositif de préorientation (8), sont disposées en rangées sur ledit dispositif de préorientation, où, en fonction du nombre n des rangées (26), chaque moyen de transport (20) se trouvant à la distance n-1 peut être entraîné par les unités d'entraînement (25) disposées dans une rangée (26).

9. Station d'alignement selon l'une quelconque des revendications précédentes, **caractérisée en ce que** l'unité de guidage latérale (34) du dispositif d'orientation principale (30) présente une bande tournante (37).

10. Station d'alignement selon la revendication 9, **caractérisée en ce que** la bande tournante (37) de l'unité de guidage latérale (34) du dispositif d'orientation principale (30) est couplée à un moteur d'entraînement (38).

11. Station d'alignement selon l'une quelconque des revendications précédentes, **caractérisée en ce que** l'angle (36) formé entre le moyen de transport (31) et l'unité de guidage latérale (34) du dispositif d'orientation principale (30) est compris entre 2° et 45°, en particulier compris entre 5° et 30°, de préférence compris entre 8° et 20°.

12. Station d'alignement selon l'une quelconque des revendications précédentes, **caractérisée en ce que** le dispositif d'orientation principale (30) présente, répartis sur la largeur (32), plusieurs moyens de transport tournants (31), en forme de bande, lesquels moyens de transport sont entraînés par une unité d'entraînement commune (44), où les poulies de renvoi (41) des différents moyens de transport tournants (31) en forme de bande sont disposées en étant étagées les unes par rapport aux autres, de manière telle qu'un bord d'extrémité (42) disposé à angle droit par rapport à l'unité de guidage latérale (34) soit formé à partir des poulies de renvoi (41).

13. Station d'alignement selon la revendication 12, **caractérisée en ce que** l'unité d'entraînement commune (44) est disposée entre des poulies de renvoi (41) du dispositif d'orientation principale (30).

14. Procédé d'alignement d'un article transporté (3) - de préférence de bagages - transporté(s) dans un système de transport (2), en particulier en utilisant une station d'alignement (1) selon l'une quelconque des revendications précédentes, ledit procédé comprenant des étapes de procédé consistant :
- à amener l'article transporté (3) jusqu'à un dispositif d'amenée (6) ;
- à l'aide d'un moyen de détection optique (13), à détecter la position de l'article transporté (3) ayant été amené ;
- à exploiter les données du moyen de détection optique (13) et à calculer la position théorique souhaitée de l'article transporté (3) ;
- à préaligner l'article transporté (3), dans un dispositif de préorientation (8), où le dispositif de préorientation (8), vu dans le sens de sa largeur (21), présente au moins deux moyens de transport tournants (20), de préférence en forme de bande, et le préalignement est réalisé de manière telle, que les deux moyens de transport (20), en correspondant à une exploitation basée sur des données du moyen de détection optique (13), soient entraînés à une vitesse d'avancée différente et de manière telle, que l'article transporté (3), qui est posé sur au moins deux des moyens de transport (20), soit tourné en direction de sa position théorique ;
où l'article transporté (3) est aligné de façon finale dans un dispositif d'orientation principale (30), qui fait suite, où le dispositif d'orientation principale (30) présente une unité de guidage latérale (34) et présente en outre au moins un moyen de transport tournant (31), de préférence en forme de bande, lequel moyen de transport, vu dans la direction de transport, est disposé suivant un angle (36) formé par rapport à l'unité de guidage latérale (34), où l'article transporté (3) est pressé, par le moyen de transport (31), contre une surface de guidage (35) de l'unité de guidage latérale (34) et, de ce fait, une surface latérale (14) de l'article transporté (3) est alignée parallèlement à la surface de guidage (35) de l'unité de guidage latérale (34), où la surface de guidage (35) est alignée parallèlement à une étendue longitudinale (22) du dispositif de préorientation (8), et où le moyen de transport (31) du dispositif d'orientation principale (30) est aligné, concernant la direction de transport dudit moyen de transport, suivant un angle (36) formé par rapport à la surface de guidage (35).

15. Procédé selon la revendication 14, **caractérisé en ce que**, pendant le préalignement de l'article transporté (3), la position de l'article transporté (3) est détectée par un autre moyen de détection optique (28), et les données de cette exploitation de position sont intégrées, comme grandeur réglée, pour déterminer la vitesse d'avancée des différents moyens de transport (20) du dispositif de préorientation (8).
